Europäisches Patentamt

European Patent Office

Office européen des brevets

(19)

(11) Publication number: **0 033 167**
A2

(12) **EUROPEAN PATENT APPLICATION**

(21) Application number: **81200002.4**

(22) Date of filing: **02.01.81**

(51) Int. Cl.³: **B 65 H 7/14**
**G 01 V 9/04**

(30) Priority: **11.01.80 NL 8000172**

(43) Date of publication of application:
**05.08.81 Bulletin 81/31**

(84) Designated Contracting States:
**DE FR GB NL**

(71) Applicant: **Océ-Nederland B.V.**
**St. Urbanusweg 102**
**NL-5914 CC Venlo(NL)**

(72) Inventor: **Stienstra, Jan, Bonne**
**Willem de Zwijgerstraat 520**
**Venlo(NL)**

(74) Representative: **Bleukx, Lucas Lodewijk Maria,**
**Ir. et al,**
**Océ-Nederland B.V. Patents & Information Dept Postbus**
**101**
**NL-5900 MA VENLO(NL)**

(54) **Device for the detection of sheet-like objects.**

(57) Device for the detection of a sheet-like object moving along a transport path (1). Both a light-sensitive element (10) and a light-emitting element (9) are arranged on one side of the transport path (1) and are each located in a channel (7, 8) which channels (7, 8) are not parallel to the plane of the transport path (1). Opposite said elements (9, 10) an optically-black chamber (12) is provided for making the device sensitive for all types of sheet-like materials.

FIG. 1

EP 0 033 167 A2

1

# DEVICE FOR THE DETECTION OF SHEET-LIKE OBJECTS

The invention relates to a device for the detection of a sheet-like object which moves along a transport path, in which a light-sensitive element and a light-emitting element are arranged on one side of the transport path, and the light-emitting and the light-sensitive elements are each located in a channel, the axis lines of said channels being not at a right angle with respect to the same perpendicular to the plane of the transport path. Such a device is known from IBM Technical Disclosure Bulletin Vol. 20, No. 3, August 1977, pp. 891-892.

In the known device the transport path is situated at the intersection of both channels, and the detection circuit will be adapted for detecting a number of different sheetlike objects, as long as they will have a defined reflection of light. Especially if dark coloured a so-called black sheet-like objects will be used, the sensitivity of the light-sensitive element will be such that there is no difference between the light quantity reflected by such a sheet-like object and the light quantity reflected by other objects, such as guiding members, in the transport path.

It is an object of the present invention to provide a device of the type mentioned in the preamble which can also be used for detecting dark coloured or black sheet-like objects.

In accordance with the invention this object is achieved in that the axis lines of the channels intersect in the plane of the transport path and in that an optically-black chamber is provided on the other side of the transport path.

An optically-black chamber will never reflect any light from the light-emitting element to the light-sensitive element, whereas even a black sheet-like object will always reflect at least 5% of said light. In this way it is possible to adjust the sensitivity of the light-sensitive element that even black sheet-like objects can be detected.

Other characteristics and advantages will become clear from the following description, reference being made to the attached drawings in which:

Fig. 1 is a schematic section of a device in accordance with the invention and

Fig. 2 is an illustration of an electrical circuit such as can be employed in the device shown in Fig. 1.

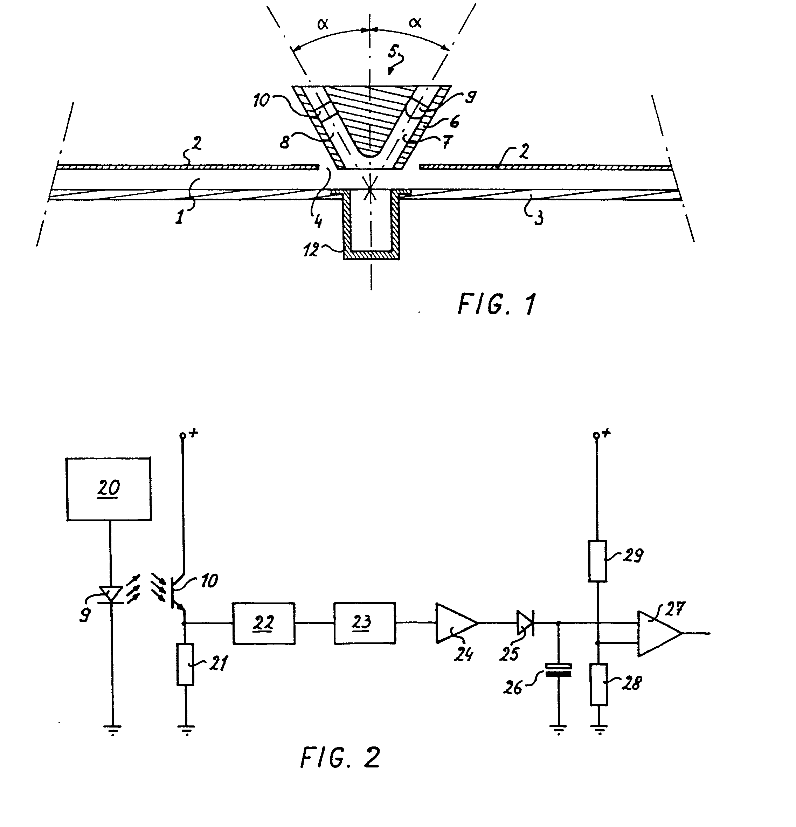

In Fig. 1 we denote as 1 a transport path for a sheet-like object, such as for example a sheet of paper. The top of the path 1 is confined by guide members 2 which can have the shape of guide-plates or guide-rods. The bottom of the path 1 is, in the embodiment illustrated, formed by a guide-plate 3. There is a recess 4 in the guide members 2, in which is located a detection device 5 in accordance with the invention.

The detection device 5 consists of a housing 6 in which there are two cylindrical channels 7 and 8. The channels 7 and 8 are placed at an angle $\alpha$ with respect to the perpendicular to the plane of the transport path and the axis lines of the two channels 7 and 8 intersect in the space defined by the guide members 2 and the guide-plate 3. A light-emitting element 9 in the form of a light-emitting diode is located in channel 7. In channel 8 there is a light-sensitive element 10 in the form of a phototransistor.

Opposite the detection device 5 there is a recess in the guide-plate 3 in which is attached a cylindrical box 12 which is closed at one side. The inside of the box 12 is preferably coated with so-called optically black varnish with a very low degree of reflection. This design ensures that the light emitted by the element 9 which arrives in the box 12 is for all practical purposes no longer reflected to the element 10. If the design permits this, it is possible to dispense with the box 12 and to provide solely the recess in the plate 3. A prerequisite for this is that there should be no light reflecting elements present underneath the plate 3.

If d is the diameter of the channels 7 and 8 and h is the height of the transport path, then an efficiently functioning system is obtained if $h \leq d \sin \alpha$, where d is small in proportion to the length of the channels. In this situation it is ensured that when no sheet-like object is present in the transport path the light from the element is almost completely absorbed in the box 12. As soon as a sheet-like object is present in the transport path at the height of the detection device 5, the light emitted by the element 9 will be reflected to the element 10. The amount of light which is effectively reflected depends on the surface properties of the sheet-like object. Results of measurements show that the amount of light reflected by optically-black sheet-like objects, e.g. having a reflection coefficient of 5%, is ten times greater than the amount of reflected light when no sheet-like object is present at the height of the detection device.

In order to keep the influence of any incoming light to a minimum, use is made of a circuit as shown in Fig. 2. The light-emitting diode 9 is connected to an alternating voltage source 20 which supplies a voltage having a frequency of at least 100 Hz. This frequency is related with the conventional power system frequency of 50 Hz, so that all light sources connected thereto oscillate at a frequency of 50 or 100 Hz. Instead of an alternating voltage source 20 it is also possible to employ a direct voltage source with an alternating voltage component superimposed thereon. Preferably use is made of a frequency lying between 1000 and 5000 Hz, so that the risk of disturbances from the environment is considerably reduced and the accuracy of leading edge or trailing edge detection at high speeds becomes greater.

The phototransistor 10 is, by means of its collector, connected to the positive terminal of a direct voltage source and its emitter is connected via a resistor 21 to earth. The emitter of the phototransistor 10 is also connected to the input of a low frequency filter 22 which is set to the frequency of the voltage source 20. Signals having a frequency less than the frequency of the voltage source 20, which are formed at the emitter of the transistor 10, are not passed by the filter 22, whilst the other signals are passed freely to the input of a high frequency filter 23, so that the signals, particularly disturbance signals, having a frequency greater than the frequency of the voltage source, are not passed. The output signal of filter 23 is amplified by an amplifier 24 and is subsequently rectified by a diode 25 and capacitor 26. The direct voltage signal thus obtained is compared in an operational amplifier with a reference voltage generated via a voltage divider formed by the

4

resistors 28 and 29. This reference voltage is selected in dependence on the signal level when no sheet-like object is present at the height of the detection device 5 and, for example, is set at a voltage which is five times greater than the direct voltage generated under these circumstances after the diode 25. The output signal 27 is then a signal denoting the presence or absence of a sheet-like object in the transport path 1 at the height of the detection device 5.

It is obvious that the invention is not restricted to the embodiment described and illustrated here, but that numerous modifications can be introduced within the framework of the claims, particularly with regard to the detection device and the associated electrical circuit.

C L A I M S

1. Device for the detection of a sheet-like object which moves along a transport path (1), in which a light-sensitive element (10) and a light-emitting element (9) are arranged on one side of the transport path (1), and the light-emitting (9) and the light-sensitive (10) elements are each located in a channel (7, 8), the axis lines of said channels (7, 8) being not at a right angle ($\alpha$) with respect to the same perpendicular to the plane of the transport path (1), c h a r a c t e r i z e d  i n  t h a t  the axis lines of the channels (7, 8) intersect in the plane of the transport path (1) and in that an optically-black chamber (12) is provided on the other side of the transport path.

2. Device in accordance with claim 1, c h a r a c t e r i z e d  i n  t h a t  the height of the transport path (1) is at its maximum identical with the product of the main dimension of the section of each channel (7, 8) and the sinus of the angle ($\alpha$) which the axes of the channels enclose with the perpendicular to the plane of the transport path (1).

3. Device in accordance with claim 1 or 2, c h a r a c t e r i z e d  i n  t h a t  the light-emitting element (9) is connected to an alternating voltage source (20) with a frequency of at least 100 Hz and in that in the detection circuit of the light-sensitive element (10) a low frequency filter (22) is incorporated which is matched to the frequency of the alternating voltage source (20).

4. Device in accordance with claim 3, c h a r a c t e r i z e d  i n  t h a t  the alternating voltage source (20) has a frequency between 1 and 5 kHz.

5. Device in accordance with claim 3 or 4, c h a r a c t e r i z e d  i n  t h a t  a high frequency filter (23) which is matched to the frequency of the alternating voltage source (20) is incorporated in the detection circuit of the light-sensitive element (10).

0033167

$^1/_1$

FIG. 1

FIG. 2